# EUROPEAN PATENT APPLICATION

(11) **EP 4 521 728 A1**
(43) Date of publication of application: **12.03.2025**
(21) Application number: 24199019.1
(22) Date of filing: 06.09.2024
(51) Int. Cl.: H04M 3/42, H04M 3/436

(54) **A METHOD FOR RECEIVING SECURE CALLS AND PERSONAL SECURITY CHECKS**

(30) Priority: 07.09.2023 SE 2330388
(71) Applicant: Snygg, Göran, 43343 Partille (SE); Sandstedt, Jonas, 44165 Alingsas (SE)
(72) Inventor: Snygg, Göran, 43343 Partille (SE); Sandstedt, Jonas, 44165 Alingsas (SE)

(57) **Abstract**

The present disclosure relates to method for verifying an identity. The method comprises receiving (S100) an incoming call or message from a contacting telephone device (120) to a receiving telephone device (100) and sending (S200) a request to the contacting telephone device (120) to perform identification using an electronic identification. In case (S300) of successful identification, the method comprises receiving (S400) the verified identification, otherwise denying (S500) the incoming call or the message.

## Description

### TECHNICAL FIELD

The present disclosure relates to receiving secure calls and personal security checks, and in particular to verifying a personal identity utilizing a receiving telephone device such as for example a receiving mobile phone.

### BACKGROUND

Today, many people receive telephone calls from persons who are not who they claim to be, from companies that have questionable sales methods or from salespersons who are experienced to behave badly. It is common that a person calls and claims to represent the called person's bank, urging the called person to sake certain action to secure that money is not lost. Instead, the actions aim at allowing the calling person to access the called person's money.

All such incoming calls are unwelcome, but difficult to avoid since the incoming telephone numbers can be obscured or made to appear as other telephone numbers. It also presents insecurity to deny an unknown incoming call that could be important.

There also occur messaging, for example by means of SMS, that can appear or claim to come from a known person who may state to be in an emergency and in need of help, normally money. In these cases, it is difficult to tell a fake message from a real message.

Furthermore, unknown persons may visit and claim to represent the police and other authorities, craftsmen, service personnel, etc., with the real purpose to perform thefts and/or to prepare thefts, burglary and other illegal acts.

All the above is often aimed at elderly people, who may be more easily worried and deceived to follow the calling or visiting person's instructions.

It is therefore desirable to avoid all the above situations in an uncomplicated manner that also suits elderly people.

### SUMMARY

It is an object of the present disclosure is to provide methods for secure calls and personal security checks, and in particular for verifying a personal identity utilizing a receiving telephone device such as for example a receiving mobile phone.

This object is achieved by means of a method for verifying an identity. The method comprises receiving an incoming call or message from a contacting telephone device to a receiving telephone device and sending a request to the contacting telephone device to perform identification using an electronic identification. In case of successful identification, the method comprises receiving the verified identification, otherwise denying the incoming call or the message.

This means that fake telephone calls and messages that are intended to appear to originate from for example relatives, authorities and common services can be avoided in an effective and uncomplicated manner. Other types of unwelcome telephone calls and messages can also be avoided. This also means that persons who initiates such telephone calls and messages are discouraged.

According to some aspects, the method further comprises presenting an option to accept or deny the incoming call or message after reception of successful identification.

In this manner, a verified identification belonging to a person, authority or common service with which the person having the receiving telephone device do not wish to communicate can be refused. This can for example be the case for sales companies.

According to some aspects, the method further comprises presenting an option to relay or deny the incoming call or message to a further receiving telephone device after reception of successful identification.

This means that representatives or relatives can handle incoming calls and messages and only let those who are successfully verified, and possibly also verified as relevant by the representatives or relatives, to be forwarded to a receiving person having the further receiving telephone device.

According to some aspects, the method further comprises skipping the request to perform identification using an electronic identification in case the incoming call or message relates to a phone number or caller identity that is present in a predefined list of phone numbers or caller identities at the receiving telephone device.

In this manner, relatives and the like may not need to perform electronic identification. It should be borne in mind, however, that telephone numbers can be hi-jacked and used for fake calls and messages.

According to some aspects, the message is at least one of a voice message, text message and a video message.

This means that the present disclosure is applicable for many types of messages.

This object is also achieved by means of a method for verifying an identity. The method comprises using an electronic identification to perform identification, and using the successful identification when calling or sending a message to a receiving telephone device such that a pre-identification is presented to the receiving telephone device.

Furthermore, by means of the present disclosure, police authorities can easier track the origin of such fake and/or unwelcome telephone calls and messages.

This object is also achieved by means of remote servers, safety systems and computer programs that are associated with the above advantages.

### BRIEF DESCRIPTION OF THE DRAWINGS

The present disclosure will now be described more in detail with reference to the appended drawings, where:
- Figure 1: shows a schematic overview of a safety system;
- Figure 2-3: show flowcharts illustrating methods according to the present disclosure;
- Figure 4: schematically illustrates a control unit arrangement; and
- Figure 5: schematically illustrates a computer program product.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

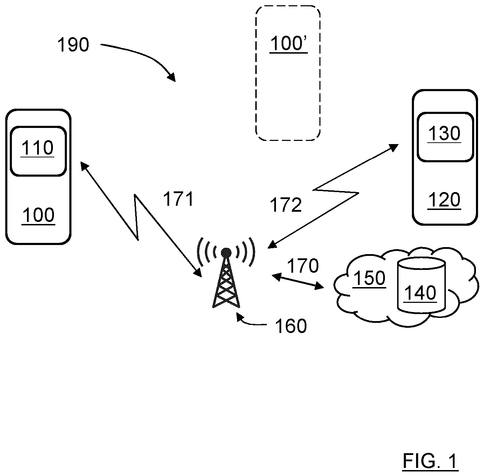

Figure 1 shows a receiving mobile phone 100 of the type smartphone comprising a first control unit 110 and a contacting mobile phone 120 comprising a second control unit 130. The mobile phones 100, 120 are adapted to communicate via a wireless communication system 160 that for example is a cellular communication system 160. This communication system 160 may, e.g., be a third generation partnership program (3GPP) defined access network like the fourth generation (4G) or the fifth generation (5G) access networks. The access network may provide access to remote networks and other resources such as, e.g., the Internet 150.

There is also a remote server 140 that is adapted for wireless communication with the mobile phones 100, 120. According to some aspects, the remote server is adapted to communicate 170, 171, 172 via the wireless communication system 160 and can according to some aspects be a part of a cloud service 150 such as for example the Internet.

According to the present disclosure, the remote server 140 adapted to route a request to perform identification using an electronic identification to the contacting mobile phone 120, to receive identification input from the contacting mobile phone 120, and to verify the identity. In case of successful verification, the remote server 140 is adapted to route a verified identification to the receiving mobile phone.

According to some aspects, the request is received from the receiving mobile phone 100, but other alternatives are possible as will be discussed later.

In this manner, a person having the receiving mobile phone 100 can urge another person, having the contacting mobile phone 120, to perform an identification procedure, for example by means of Swedish BankID or similar. The receiving mobile phone 100 is provided with a verified identification of the person having the contacting mobile phone 120, and different measures can be taken, either automatic measures or manually operated measures.

For example, when an incoming call or message from the contacting mobile phone 120 is to be connected to the receiving mobile phone 100, the person having the contacting mobile phone 120 can be automatically urged to perform the identification procedure before the call or message is routed to the receiving mobile phone 100. This means that the person having the receiving mobile phone 100 does not need to be aware of the incoming call or message until the person having the contacting mobile phone 120 has performed the identification procedure successfully.

In this context, successfully may mean that the identification procedure has provided a verified identification, and/or that the verified identification is a person in an approved list at the receiving mobile phone 100. The verified identification may also be related to an authority, common services and the like such as police, banks, postal/delivery services and hospitals and related personnel. Such calls and messages having a verified identification may always be routed to the receiving mobile phone 100. The receiving mobile phone 100 may be adapted to provide information about the contacting mobile phone 120, such as the persons, authorities and common services mentioned above, such that the person having the receiving mobile phone 100 is aware of the verified identity.

In this manner a verified identity can be provided to the person having the receiving mobile phone 100 without having to reveal secret telephone numbers and the like, such as telephone numbers to doctors, police personnel and the like.

Furthermore, in accordance with the present disclosure, as an alternative or as a complement to the above, the remote server 140 is adapted to route a successful identification, obtained by using an electronic identification at the contacting mobile phone 120, to the receiving mobile phone 100, such that a pre-identification is presented to the receiving mobile phone 100.

This means that the person having the contacting mobile phone 120 can perform a pre-identification before contacting the receiving mobile phone 100, such that the person having the receiving mobile phone 100 does not need to urge the other person, having the contacting mobile phone 120, to perform an identification procedure.

The verified pre-identification may also be related to an authority, common services and the like such as police, banks, postal/delivery services and hospitals and related personnel. Such calls and messages having a verified identification may always be routed to the receiving mobile phone 100.

According to some aspects, the remote server 140 is adapted to route a call or a message from the contacting mobile phone 120 to the receiving mobile phone 100 together with the pre-identification.

This means that the person having the receiving mobile phone 100 can presented with a verified identification of the person having the contacting mobile phone 120 when receiving a call or a message from the contacting mobile phone 120. A verified identity can be provided to the person having the receiving mobile phone 100 without having to reveal secret telephone numbers and the like, such as telephone numbers to doctors, police personnel and the like. For example, a verified identity may be "SEB" of "Handelsbanken" for the bank, "Swedish Police" for the police etc. For people, their verified names and possible phone numbers may be revealed to the person having the receiving mobile phone 100.

In this manner, fake telephone calls and messages from relatives, authorities and common services can be avoided in an effective and uncomplicated manner, and thus avoiding personal misery and losses as well as costs for compensations and handling these matters. Furthermore, unwanted calls from sales companies can also be avoided, either fake or real such calls, since the identity of the calling person, company etc. will be known to the person having the receiving telephone device in case of successful identification. In case of unsuccessful identification, the call will according to some aspects not even reach the receiving telephone device.

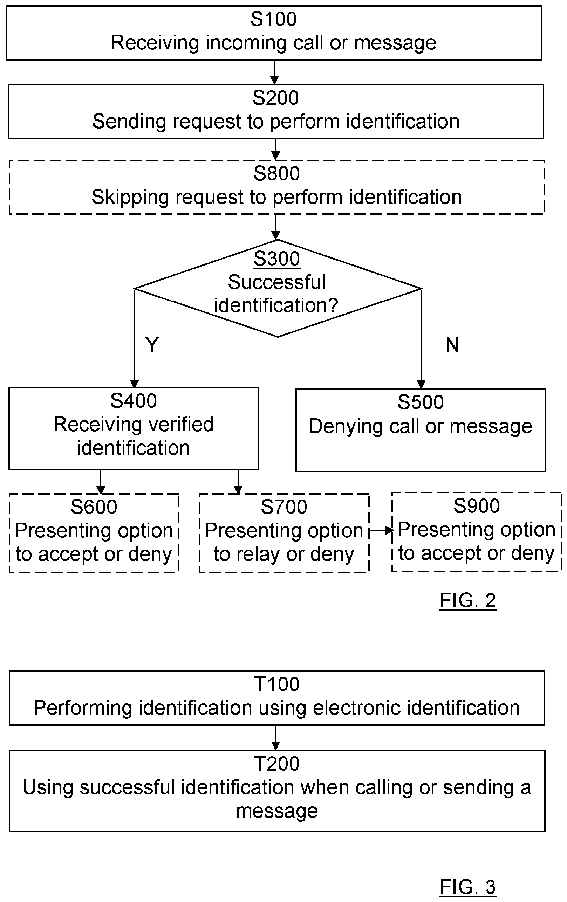

With reference to Figure 2, the present disclosure also relates to a method for verifying an identity. The method comprises receiving S100 an incoming call or message from a contacting mobile phone 120 to a receiving mobile phone 100, and sending S200 a request to the contacting mobile phone 120 to perform identification using an electronic identification.

According to some aspects, the method relates to verifying a personal identity, or the identity of a company, association, authority and the like. According to some aspects, the method is performed utilizing the receiving mobile phone 100 that for example is of the type smartphone, but other alternatives are possible as will be described later.

In case S300 of successful identification, the method comprises receiving S400 the verified identification, otherwise denying S500 the incoming call or the message.

According to some aspects, the verified identification is received at the receiving mobile phone 100, but other alternatives are possible as will be described later.

This provides the effects and advantages discussed above. In particular, fake telephone calls and messages that are intended to appear to originate from for example relatives, authorities and common services can be avoided in an effective and uncomplicated manner. Other types of unwelcome telephone calls and messages can also be avoided.

According to some aspects, sending S200 a request to the contacting mobile phone 120 to perform identification using an electronic identification can be performed automatically or be initiated manually.

According to some aspects, the method further comprises presenting S600 an option to accept or deny the incoming call or message after reception of successful identification.

In this manner, a verified identification belonging to a person, authority or common service with which the person having the receiving mobile phone 100 do not wish to communicate can be refused. This can for example be the case for sales companies.

According to some aspects, the method further comprises skipping S800 the request to perform identification using an electronic identification in case the incoming call or message relates to a phone number or caller identity that is present in a predefined list of phone numbers or caller identities at the receiving mobile phone. Such a predefined list can for example be in the form of a list of contacts.

In this manner, relative and the like may not need to perform electronic identification. It should be borne in mind, however, that telephone numbers can be hi-jacked and used for fake calls and messages. In the case of doubt, according to some aspects, the person having the receiving mobile phone 100 can manually initialize sending a request to the contacting telephone device 120 to perform identification using an electronic identification.

According to some aspects, the message is at least one of a voice message, text message and a video message.

This means that the present disclosure is applicable for many types of messages.

With reference to Figure 3, the present disclosure also relates to a method for verifying an identity. The method comprises using T100 an electronic identification to perform identification, and using T200 the successful identification when calling or sending a message to a receiving mobile phone such that a pre-identification is presented to the receiving mobile phone.

According to some aspects, the method relates to verifying a personal identity, or the identity of a company, association, authority and the like. According to some aspects, the method is performed utilizing a contacting mobile phone 120 that for example is of the type smartphone, but other alternatives are possible as will be described later.

In this manner, a person visiting the person having the receiving mobile phone 100 can use an electronic identification to perform identification such that the visiting person's identity can be established. This is advantageous to avoid fake visits from domestic services, police etc. In other words, this means that a secure identification can be performed at many different occasions, avoiding unknown persons masquerading as representing something or someone to achieve their goals.

According to some aspects, the message is at least one of a voice message, text message and a video message.

The present disclosure relates to the remote server 140 according to the above.

The present disclosure also relates to a safety system 190 comprising the remote server 140 as described herein and a receiving mobile phone 100 of the type smartphone, where a mobile phone application program, App, accessed via the receiving mobile phone 100 is adapted to at least partly execute the methods described herein.

This means that an App can handle the identification procedure at the receiving mobile phone 100, and where only those persons wanting to have the identification procedure described above operational can choose to install this App.

The App can be any type of suitable application program and can be run on other types of receiving telephone devices as will be described later, a receiving mobile phone 100 of the type smartphone is only an example.

According to some aspects, the App is either downloaded into the receiving mobile phone 100 or run at the remote server 140, where the App has been downloaded into the receiving mobile phone 100 from the remote server 140.

According to some aspects, the safety system 190 further comprises a wireless communication system 160, where the mobile phones 100, 120 and the remoter server 140 are adapted to communicate via the wireless communication system 160.

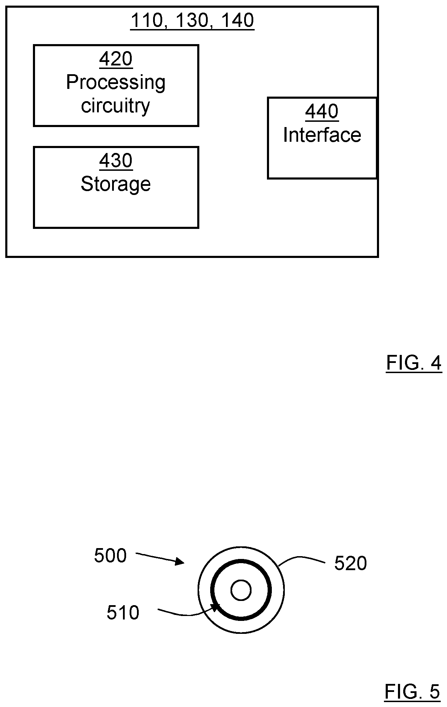

In Figure 4 it is schematically illustrated, in terms of a number of functional units, the components of a control unit 110, 130, 140 according to embodiments of the discussions herein, for example the first control unit 110, the second control unit 130 and/or the remote server 140. Processing circuitry 420 is provided using any combination of one or more of a suitable central processing unit CPU, multiprocessor, microcontroller, digital signal processor DSP, etc., capable of executing software instructions stored in a computer program product, e.g. in the form of a storage medium 430. The processing circuitry 420 may further be provided as at least one application specific integrated circuit ASIC, or field programmable gate array FPGA. The processing circuitry thus comprises a plurality of digital logic components.

Particularly, the processing circuitry 420 is configured to cause the control unit 110, 130, 140 to perform a set of operations, acquiring information and communication information in accordance with the present disclosure. For example, the storage medium 430 may store the set of operations, and the processing circuitry 420 may be configured to retrieve the set of operations from the storage medium 430 to cause the control unit 110, 130, 140 perform the set of operations. The set of operations may be provided as a set of executable instructions. Thus, the processing circuitry 420 is thereby arranged to execute at least parts of the methods as herein disclosed.

The storage medium 430 may also comprise persistent storage, which, for example, can be any single one or combination of magnetic memory, optical memory, solid state memory or even remotely mounted memory.

According to some aspects, the control unit 110, 130, 140 further comprises an interface 440 for communications with at least one external device such as the remote server 140, the mobile phones 100, 120 and the wireless communication system 160. As such the interface 440 may comprise one or more transmitters and receivers, comprising analogue and digital components and a suitable number of ports for wireline communication. The interface 440 can be adapted for communication with other devices, such as the remote server 140, the mobile phones 100, 120 and the wireless communication system 160. Examples of such wireless communication devices are Bluetooth^{®}, WiFi^{®} (IEEE802.11b), Global System Mobile (GSM) and LTE (Long Term Evolution), to name a few.

Figure 5 shows a computer program product 500 comprising computer executable instructions 510 stored on media 520 to execute any of the methods disclosed herein.

The present disclosure relates to a computer program 510 for executing the methods as described herein, where the computer program 510 comprises computer code which, when run on processing circuitry 420 of a control unit 110, 130, 140, causes the control unit 110, 130, 140 to perform the methods as described herein.

According to some aspects, the computer program product 500 is implemented for a system control unit. According to some aspects, the system control unit can be practically realized in many ways, for example as a single unit or being comprised in at least one of the first control unit 110, the second control unit 130 and/or the remote server 140.

The present disclosure is not limited to the above examples, by may vary freely within the scope of the appended claims. For example, the App may be adapted with further functionality, such as a voice call recording functionality. Furthermore, the App can be adapted to always deny certain calls such as foreign calls.

The App can furthermore be used by representatives or relatives to, for example, old or sick receiving persons who may be unable to handle the App themselves. The representatives or relatives may then handle incoming calls and messages and only let those who are successfully verified, and possibly also verified as relevant by the representatives or relatives, to be forwarded to the receiving person. In this case, with reference also to Figure 2, the method according to the present disclosure comprises presenting S700 an option to relay or deny the incoming call or message to a further receiving telephone device 100' (schematically indicated in Figure 1) after reception of successful identification. The original incoming call or message has then first been routed to the representative or relative in question after reception of successful identification. In this context relay corresponds to forward. This functionality is also conceivable for an adult handling incoming telephone calls and/or messages to a child, as well as at other places/situations where there is a desire to control the origin of incoming telephone calls and/or messages such as prisons and the like.

If the incoming call or message has been relayed to the further receiving telephone device 100', according to some aspects the method further comprises presenting S900 an option to accept or deny the incoming telephone call at the further receiving telephone device 100'. In this manner, the person having the further receiving telephone device 100' may choose between accepting or denying the incoming telephone call, suitably when being presented with information about the calling person or company via the further receiving telephone device 100'.

The further receiving telephone device 100' can for example be a mobile phone, for example as defined below, or a fixed line telephone. A fixed line telephone can for example be a conventional wire-connected telephone or an IP telephone. Such a relaying can also be achieved in other ways than using an App on a mobile phone, see for example the definitions of a mobile phone in the present context below where an App is not applicable.

Authorities and common services as exemplified above, as well as other persons and associations using a contacting mobile phone 120, may use social security numbers when calling. This means that a social security number that is typed into the contacting mobile phone 120 enables the contacting mobile phone 120 to call the person associated with that social security number, without the calling person knowing the telephone number of the person having the receiving mobile phone 100.

As mentioned above, a verified identity can be provided to the person having the receiving mobile phone 100 without having to reveal secret telephone numbers and the like, such as telephone numbers to doctors, police personnel and the like. However, according to some aspects, the associated activity is logged such that if an unwelcome call is received from such a person, the call can be tracked afterwards such that the person having the contacting mobile phone 120 can be identified if necessary.

Any one of mobile phones mentioned, such as the contacting mobile phone 120 and the receiving mobile phone 100, can be of the type smartphone as discussed above. This is not necessary, other alternatives are possible, and in the present context the present disclosure relates to telephone devices that can be any type of means for handling messages, for example voice messages, video messages and/or text messages. The receiving mobile phone 100 is thus generally constituted by a receiving telephone device 100 and the contacting mobile phone 120 is thus generally constituted by a contacting telephone device 120, where the contacting telephone device 120 should be able to perform identification using an electronic identification.

For example, according to some aspects, the receiving telephone device 100 and/or the contacting telephone device 120 can be a fixed line telephone device, a fixed line telephone device that emulates or imitates a mobile phone, a mobile phone that emulates or imitates a fixed line telephone device, or a computer device. The emulating or imitating device is suitably also realized by means of a computer device. An electronic identification can for example be performed by using a computer-based verification such as for example BankID on a computer that furthermore can be automatized. In this way, the contacting telephone device 120 may for example be realized by a computer in a call center at an authority or common service, the computer being used for creating a call to a receiving telephone device 100 that in turn can be realized by a personal computer or a smart phone. The term telephone device should thus be interpreted broadly in the present context.

An App according to the above can of course be run on a computer such as a personal computer as well, including iPads and similar electronic devices. The methods described herein can also at least partly be run in a fixed line telephone switch or router, for example an analogue telephone adapter for IP telephony or a remote telephony switching/routing device.

The methods described herein can according to some aspects at least partly be implemented by means of an App, and can according to some further aspects be integrated with a program or App that is associated with the electronic identification, such as for example said BankID.

The contacting telephone device 120 can according to some aspects perform identification using an electronic identification in a manual or automatic manner, where for example authorities, banks and hospitals suitably can perform identification using an electronic identification in a manual or automatic manner.

## Claims

1. A method for verifying an identity, where the method comprises
receiving (S100) an incoming call or message from a contacting telephone device (120) to a receiving telephone device (100);
sending (S200) a request to the contacting telephone device (120) to perform identification using an electronic identification; and in case (S300) of successful identification
receiving (S400) the verified identification; otherwise
denying (S500) the incoming call or the message.

2. The method according to claim 1, further comprising presenting (S600) an option to accept or deny the incoming call or message after reception of successful identification.

3. The method according to any one of the claims 1 or 2, further comprising presenting (S700) an option to relay or deny the incoming call or message to a further receiving telephone device (100') after reception of successful identification.

4. The method according to any one of the previous claims, further comprising skipping (S800) the request to perform identification using an electronic identification in case the incoming call or message relates to a phone number or caller identity that is present in a predefined list of phone numbers or caller identities at the receiving telephone device (100).

5. The method according to any one of the previous claims, wherein the message is at least one of a voice message, text message and a video message.

6. A method for verifying an identity, where the method comprises
using (T100) an electronic identification to perform identification; and
using (T200) the successful identification when calling or sending a message to a receiving telephone device (100) such that a pre-identification is presented to the receiving telephone device (100).

7. The method according to claim 6, wherein the message is at least one of a voice message, text message and a video message.

8. A remote server (140) adapted to
- route a request to perform identification, using an electronic identification, to a contacting telephone device (120),
- receive identification input from the contacting telephone device (120); and to
- verify the identity;
and in case of successful verification, the remote server (140) is adapted to
- route a verified identification to the receiving telephone device (100).

9. A remote server (140) adapted to route a successful identification, obtained by using an electronic identification at a contacting telephone device (120) to a receiving telephone device (100), such that a pre-identification is presented to the receiving telephone device (100).

10. The remote server according to claim 9, wherein the remote server (140) is adapted to route a call or a message from the contacting telephone device (120) to the receiving telephone device (100) together with the pre-identification.

11. The remote server according to any one of the claims 8-10, wherein the remote server (140) is a part of a cloud service (150) and is adapted to communicate via a communication system (160).

12. A safety system (190) comprising the remote server (260) according to any one of the claims 8-11 and a receiving telephone device (100), where an application program, App, accessed via the receiving telephone device (100) is adapted to at least partly execute the method according to any one of the claims 1-7.

13. The safety system (190) according to claim 12, wherein the App either is downloaded into the receiving telephone device (100) or run at the remote server (140), where the App has been downloaded into the receiving telephone device (100) from the remote server (140).

14. The safety system (190) according to any one of the claims 12 or 13, further comprising a wireless communication system (160), where the mobile phones (100, 120) and the remoter server (140) are adapted to communicate via the wireless communication system (160)

15. A computer program (510) comprising computer readable instructions for applying methods according to any one of claims 1-7, and/or a computer readable medium (500) comprising said computer program (510).
